# EUROPÄISCHE PATENTANMELDUNG

(11) **EP 1 077 145 A1**
(43) Veröffentlichungstag der Anmeldung: **21.02.2001**
(21) Anmeldenummer: 00114367.6
(22) Anmeldetag: 05.07.2000
(51) Int. Cl.: B60G 17/02, B60G 17/015, B60G 21/10

(54) **Regelbare Federkraft für eine Fahrzeugradaufhängung**

(30) Priorität: 14.08.1999 DE 19938669
(71) Anmelder: Fritz, Fend, 93138 Lappersdorf (DE)
(72) Erfinder: Fritz, Fend, 93138 Lappersdorf (DE)
(74) Vertreter: Graf, Helmut, Dipl.-Ing.

(57) **Zusammenfassung**

Die Erfindung bezieht sich auf ein neuartiges Fahrzeug, insbesondere Straßenfahrzeug mit wenigstens einer an einem Fahrzeugrahmen über wenigstens zwei Federelemente gefederten Radachse mit Einzelradaufhängung für die dortigen Fahrzeugräder.

## Beschreibung

Die Erfindung bezieht sich auf ein Fahrzeug, insbesondere Straßenfahrzeug gemäß Oberbegriff Patentanspruch 1.

Aufgabe der Erfindung ist es, ein Fahrzeug aufzuzeigen, mit dem sichere Kurvenfahrten ohne ein Ausbrechen und/oder Kippen des Fahrzeugs möglich ist. Zur Lösung dieser Aufgabe ist ein Fahrzeug entsprechend dem Patentanspruch 1 ausgebildet.

Weiterbildungen der Erfindung sind Gegenstand der Unteransprüche. Die Erfindung wird im Folgenden anhand der Figuren an einem Ausführungsbeispiel näher erläutert. Es zeigen:
- Fig. 1: in verschiedenen Positionen a - c das Verhalten eines gefederten Fahrzeugs bei Durchfahren von mehreren aneinander anschließenden Kurven entgegengesetzter Krümmung;
- Fig. 2: in vereinfachter Darstellung eine gefederte Achse eines erfindungsgemäßen Fahrzeugs bei Geradeausfahrt;
- Fig. 3: die Darstellung der Figur 2 beim Durchfahren einer Kurve.

In den Figuren ist allgemein mit 1 jeweils ein Straßenfahrzeug bezeichnet, von dem sehr schematisch eine Radachse 2 und der auf dieser gefedert vorgesehene Fahrzeugrahmen 3 (Fahrzeugkarosserie) wiedergegeben sind.

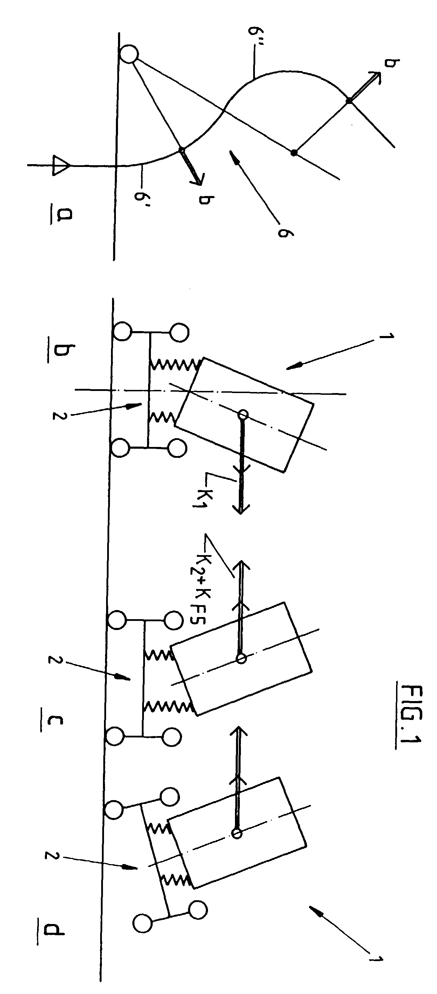

In der Figur 1 ist die Federung durch zwei Federn 4 und 5 schematisch angedeutet. Weiterhin ist in der Figur 1 in der Position a der Verlauf einer Kurvenfahrt wiedergegeben, und zwar als Kurve 6 mit mehreren aufeinander folgenden Kurvenabschnitten mit entgegengesetzter Krümmung. Wie in der Position b dargestellt ist, erfährt der Fahrzeugrahmen 3 aufgrund der Zentrifugalkraft K₁ eine Neigung in der Weise, daß die Feder 4 auf der bezogen auf den Kurvenabschnitt 6' innenliegenden Seite entspannt und die Feder 5 zunehmend gespannt wird. Bei den anschließenden Kurvenabschnitt 6'' wirkt auf den Fahrzeugrahmen 3 eine entgegengesetzte Zentrifugalkraft K₂ sowie auch die Kraft K_{F5} der sich entspannenden Feder 5, so daß es unter Umständen schon beim Durchfahren des Kurvenabschnittes 6'' entsprechend der Darstellung der Position d zu einem Kippen des Fahrzeugs 1 kommt, und zwar nicht durch die Kraft K₂, sondern durch die zusätzliche Kraftkomponente K_{F5}, die sich aus der sich entspannenden Feder 5 ergibt. Aus der Darstellung der Figur 1 ist auf jeden Fall ersichtlich, daß es beim Durchfahren mehrerer, aneinander anschließender Kurvenabschnitte mit unterschiedlicher Krümmung es aufgrund der Federkräfte der Federn 4 und 5 zu einem gefährlichen Aufschaukeln der Kippbewegung des Fahrzeugrahmens 3 und schließlich zu einem Umkippen des Fahrzeugs kommen kann (hierzu 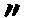 Elchtest").

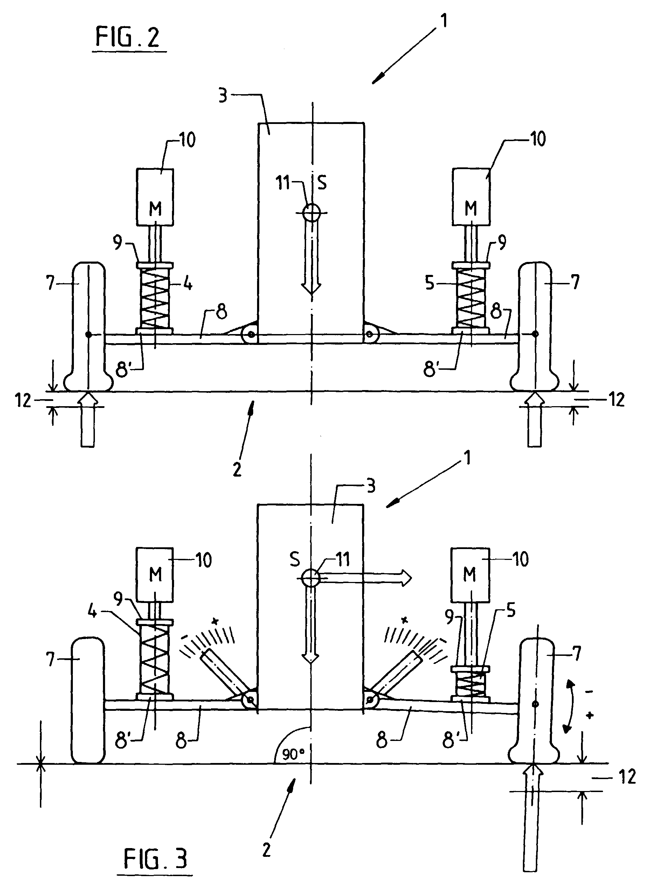

Die Figuren 2 und 3 zeigen eine Stabilisier-Einrichtung, die dieses Aufschaukeln vermeidet. Bei den in den Figuren 2 und 3 wiedergegebenen Fahrzeug weist die Fahrzeugachse 2 eine Einzelradaufhängung auf, d.h. die Räder 7 dieser Fahrzeugachse sind jeweils an einem Lenker 8 gelagert, der an einem Ende um eine senkrecht zur der Zeichenebene der Figuren 2 und 3 und damit in Fahrzeuglängsrichtung verlaufende Achse am Fahrzeugrahmen 3 bzw. an der Fahrzeugkarosserie angelenkt ist. Die jeweilige Feder 4 bzw. 5 stützt sich mit ihrem unteren Ende an den Lenker 8 bzw. an einem dort vorgesehenen Federteller 8' und mit ihrem oberen Ende an einem Federteller 9 ab, dessen Position relativ zu dem Lenker 8 einstellbar ist, und zwar mit Hilfe eines Stellmotors 10. Für jede Feder bzw. für jeden Lenker 8 ist ein eigener Stellmotor 10 vorgesehen. Die Stellmotoren 10 sind Bestandteil eines Steuer- und Regelkreises, der u.a. auch einen Beschleunigungssensor 11 aufweist, welcher die seitliche Beschleunigung des Fahrzeugs 1 bei Kurvenfahrten ermittelt.

Bevorzugt ist der Steuer- und Regelkreis auch so ausgebildet, daß er auch ohne Einwirkung einer seitlichen Beschleunigung durch Verstellen der Federteller 9 die Federn 4 und 5 so vorspannt, daß sich in Abhängigkeit von dem Gesamtgewicht des

Fahrzeugs 1 eine optimale Federung ergibt, d.h. bei einem kleineren Gesamtgewicht des Fahrzeugs eine weichere Federung und bei einem größeren Gesamtgewicht des Fahrzeuges eine härtere Federung beispielsweise in der Weise, daß die Lenker 8 unabhängig oder weitestgehend unabhängig von dem jeweiligen Gesamtgewicht des Fahrzeugs 1 die selbe Ausgangsstellung aufweisen. Dies ist insbesondere bei Fahrzeugen von Vorteil, deren Leergewicht im Vergleich zu dem Gewicht der zulässigen Zuladung relativ gering ist, so daß das Gesamtgewicht des Fahrzeugs stark von der Zuladung abhängt.

Mit dem Sensor 11 wird, wie ausgeführt, die auf das Fahrzeug einwirkende seitliche Beschleunigung nach Größe und Richtung erfaßt. Mit dem Signal des Sensors 11 werden über einen Steuer- oder Regelkreis die Stellmotoren 10 so nachgestellt, daß die bei einer Kurvenfahrt außen liegende Feder, beispielsweise die Feder 5 der Figur 2 zusätzlich gespannt und die bezogen auf die Kurve innen liegende Feder, d.h. bei der Darstellung der Figur 2 die Feder 4 entspannt, so daß keine oder praktisch keine Neigung der Fahrzeugkarosserie bzw. des Fahrzeugrahmens 3 bei der Kurvenfahrt eintritt.

Bei mehreren aneinander anschließenden Kurvenstücken unterschiedlicher Krümmung erfolgt dann gesteuert durch das Steuer- und Regelsystem unter Berücksichtigung des Signals des Sensors 11 ein schnelles Verstellen der Federn 4 und 5 durch die Stellmotoren 10, so daß es zu dem in der Figur 1 dargestellten nachteiligen Kippen des Fahrzeugs 1 nicht kommen kann.

Es genügt, mit dem Sensor 11 lediglich die Beschleunigung des Fahrzeugs in der horizontalen, senkrecht zur Achse des Fahrzeugs verlaufenden Achse zu erfassen.

Grundsätzlich ist es auch möglich, als Regelgröße in den Regelkreis eine eventuelle Neigung der Karosserie 3 mit einzuschließen und/oder den Sensor 11 lediglich als Neigungssensor auszubilden und derart in einem Regelkreis zu integrieren, daß jede Neigung der Karosserie bzw. des Fahrzeugrahmens 3 aus der aufrechten Soll-Lage zu einem ein Nachregeln der Stellmotoren 10 bewirkenden Signal führt.

In dem Stell- oder Regelkreis kann weiterhin auch, wie in der Figur 3 dargestellt ist, die Reifeneinfederung beispielsweise als Zuschlagsgröße berücksichtigt werden, d.h. die Nachstellung des jeweiligen Federtellers 9 erfolgt dann zusätzlich auch noch um den Betrag 12 der Reifeneinfederung.

Die Erfindung wurde voranstehend an einem Ausführungsbeispiel beschrieben. Es versteht sich, daß zahlreiche Änderungen sowie Abwandlungen möglich sind, ohne daß dadurch der der Erfindung zugrundeliegende Erfindungsgedanke verlassen wird.

Vorstehend wurde davon ausgegangen, daß nur eine Achse des Fahrzeugs 1 die mit den Stellmotoren 10 verstellbare Federung aufweist. Grundsätzlich ist es beispielsweise bei Fahrzeugen mit nur drei Rädern oder mit einer hinteren Radachse, deren Räder einen geringen axialen Abstand voneinander aufweisen, ausreichend nur die Vorderachse in der vorstehend beschriebenen Weise auszubilden.

Es besteht aber selbstverständlich auch die Möglichkeit, bei mehrachsigen Fahrzeugen sämtliche Achsen mit der vorbeschriebenen verstellbaren Federung zu versehen, wobei dann durch die Steuer- und Regeleinrichtung zugleich auch eine gleichmäßige Kraftverteilung auf sämtliche Räder des Fahrzeugs bewirkt werden kann.

### Bezugszeichenliste

- 1: Straßenfahrzeug
- 2: Radachse
- 3: Fahrzeugrahmen
- 4, 5: Federung
- 6: Kurvenfahrt
- 6', 6'': Kurvenabschnitt
- 7: Rad
- 8: Lenker
- 9: Federteller
- 10: Stellmotor
- 11: Sensor
- 12: Reifeneinfederung

## Patentansprüche

1. Fahrzeug, insbesondere Straßenfahrzeug mit wenigstens einer an einem Fahrzeugrahmen (3) über wenigstens zwei Federelemente (4, 5) gefederten Radachse (2) mit Einzelradaufhängung für die dortigen Fahrzeugräder (7), wobei sich jedes Federelement (4, 5) jeweils gegen wenigstens ein erstes Gegenlager an der Radachse (2) sowie gegen wenigstens ein zweites Gegenlager (9) am Fahrzeugrahmen abstützt, **dadurch gekennzeichnet**, daß die Gegenlager der jeweiligen Federelemente (4, 5) mit Hilfe eines motorischen Stellgliedes (10) im Sinne einer Verstärkung oder Reduzierung der Federkraft des jeweiligen Federelementes (4, 5) bewegbar ist, und daß die Stellmotoren (10) Bestandteil eines Steuer- oder Regelkreises sind, der wenigstens einen die Neigung des Fahrzeugs um eine Fahrzeuglängsachse und/oder eine seitliche Beschleunigung des Fahrzeugs und/oder das Gesamtgewicht des Fahrzeugs und/oder einen die Radstellung erfassenden Sensor erfassenden Sensor (11) aufweist.

2. Fahrzeug nach Anspruch 1, dadurch gekennzeichnet, daß der Steuer- oder Regelkreis in Abhängigkeit von dem Signal des wenigstens einen Sensors (11) die Stellmotoren (10) derart steuert, daß bei einer Kurvenfahrt die Federkraft des jeweils außenliegenden Federelementes (5) erhöht und das innenliegende Federelement (4) entlastet wird.
